(19) Europäisches Patentamt
European Patent Office
Office européen des brevets

(11) **EP 4 067 060 B1**

(12) **EUROPEAN PATENT SPECIFICATION**

(45) Date of publication and mention of the grant of the patent:
**09.09.2026 Bulletin 2026/37**

(21) Application number: **20893255.8**

(22) Date of filing: **11.11.2020**

(51) International Patent Classification (IPC):
***B32B 5/02*** *(2006.01)* ***B32B 5/18*** *(2006.01)*
***B29C 43/18*** *(2006.01)* ***B29C 70/18*** *(2006.01)*
***B29C 70/40*** *(2006.01)* ***B29C 70/68*** *(2006.01)*
***B29C 43/20*** *(2006.01)* ***B29C 70/46*** *(2006.01)*
***B29C 70/86*** *(2006.01)* ***B32B 3/04*** *(2006.01)*
***B32B 9/00*** *(2006.01)* ***B32B 9/04*** *(2006.01)*
***B29C 44/12*** *(2006.01)* ***B32B 5/26*** *(2006.01)*
*B29K 105/04* *(2006.01)*

(52) Cooperative Patent Classification (CPC):
**B29C 70/86; B29C 43/18; B29C 44/1266; B29C 44/1271; B29C 70/465; B32B 3/04; B32B 5/022; B32B 5/26; B32B 9/007; B32B 9/04; B32B 9/047;** B29C 43/20; B29C 2043/181; B29K 2105/04; B29K 2995/0015; (Cont.)

(86) International application number:
**PCT/JP2020/042008**

(87) International publication number:
**WO 2021/106562 (03.06.2021 Gazette 2021/22)**

(54) **THERMAL CONDUCTOR AND MANUFACTURING METHOD THEREOF**

THERMISCHER LEITER UND HERSTELLUNGSVERFAHREN DAFÜR

CONDUCTEUR THERMIQUE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.11.2019 JP 2019216115**

(43) Date of publication of application:
**05.10.2022 Bulletin 2022/40**

(73) Proprietor: **Toray Industries, Inc.**
**Tokyo 103-8666 (JP)**

(72) Inventors:
- **SUZUKI, Takafumi**
**Nagoya-shi, Aichi 455-8502 (JP)**
- **HONDA, Takumi**
**Iyo-gun, Ehime 791-3193 (JP)**
- **HONMA, Masato**
**Iyo-gun, Ehime 791-3193 (JP)**

(74) Representative: **Kador & Partner Part mbB**
**Corneliusstraße 15**
**80469 München (DE)**

(56) References cited:
**EP-A2- 0 083 435** **EP-A2- 2 874 479**
**WO-A1-2019/212051** **JP-A- 2002 038 033**
**JP-A- 2010 010 599** **JP-A- 2010 064 391**
**JP-A- 2016 028 880** **JP-A- 2017 069 341**
**US-A- 4 159 294** **US-A1- 2013 273 275**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B32B 2250/40; B32B 2260/023; B32B 2260/046; B32B 2262/106; B32B 2262/16; B32B 2307/302; B32B 2307/546; B32B 2307/72; B32B 2307/732; B32B 2439/00

## Description

TECHNICAL FIELD

The present invention relates to a thermal conductor, a housing including the thermal conductor, and a method for manufacturing a thermal conductor.

BACKGROUND ART

In recent years, market demands for lightness are increasing year by year for industrial products such as automobiles, aircraft, and electronic equipment. In addition, market demands for heat dissipation are also increasing year by year with improvement in performance of heat-generating modules such as engines, motors, and processors. In order to meet these demands, molded articles having an excellent lightweight property and high thermal conductivity are widely used for various industrial applications. Among such molded articles, a thermal conductor obtained by combining a thermally conductive member having high thermal conductivity and a lightweight member having an excellent lightweight property has an excellent heat dissipation property in addition to an excellent lightweight property, and therefore is expected to be used in each product, and has been widely studied.

Patent Document 1 describes an invention of a thermal conductor including a laminate of a thermally conductive member and a rigid retaining member including a fiber-reinforced plastic. Patent Document 1 describes that the lamination of a thermally conductive member and a rigid retaining member including a fiber-reinforced plastic can provide a thermal conductor having both excellent thermal conductivity and an excellent lightweight property.

Patent Document 2 describes an invention of a thermal conductor in which a laminated body of graphite sheets is covered with a resin layer. Patent Document 2 describes that using graphite sheets and a resin for forming a housing enables achieving both excellent thermal conductivity and an excellent lightweight property.

Patent Document 3 describes an invention of a thermal conductor in which a graphite sheet is interposed between two sponge layers. Patent Document 3 describes that interposing a graphite sheet between two sponge layers enables achieving excellent thermal conductivity.

PRIOR ART DOCUMENTS

PATENT DOCUMENTS

Patent Document 1: International Publication No. 2016/002457
Patent Document 2: Japanese Patent Laid-open Publication No. 2006-95935
Patent Document 3: International Publication No. 2018/198293

US2013273275A1 discloses a shell structure useful for dissipating an electronic device with heat source, comprises first fiber polymer composite material layer; second fiber polymer composite material layer; and heat dissipating layer.

SUMMARY OF THE INVENTION

PROBLEMS TO BE SOLVED BY THE INVENTION

Patent Document 1 describes that the thermal conductor in Patent Document 1 can have both excellent thermal conductivity and an excellent lightweight property by lamination of a thermally conductive member and a rigid retaining member. However, the rigid retaining member is a dense fiber-reinforced plastic and has room for improvement in the lightweight property.

Patent Document 2 describes that the thermal conductor in Patent Document 2 can have both excellent thermal conductivity and an excellent lightweight property by covering the surface and the end of a graphite sheet with a resin. However, the resin covering the graphite sheet is a dense resin and has room for improvement in the lightweight property. Furthermore, the thermal conductor is considered to have low rigidity because the graphite sheet is covered with a non-reinforced resin.

Patent Document 3 describes that the thermal conductor in Patent Document 3 has excellent thermal conductivity by interposing a graphite sheet between two sponge layers. The sponge layer is a foamed resin and has an excellent lightweight property, but is considered to have very low rigidity.

The present invention has been made in view of the above problems, and an object of the present invention is to provide a thermal conductor having both an excellent lightweight property and excellent rigidity, and having an excellent heat dissipation property.

SOLUTIONS TO THE PROBLEMS

In order to solve the above problems, the thermal conductor of the present invention has the following configuration.
A thermal conductor that includes the features of claim 1.

EFFECTS OF THE INVENTION

According to the present invention, a thermal conductor can be obtained that has both an excellent lightweight property and excellent rigidity and has an excellent heat dissipation property.

BRIEF DESCRIPTION OF THE DRAWINGS

Fig. 1 is a schematic view illustrating one embodiment of a thermal conductor which is not part of the present invention.
Fig. 2 is a schematic view illustrating a thermal conductor of the present invention.
Fig. 3 is a schematic view illustrating an embodiment excluded from embodiments of a thermal conductor of the present invention.
Fig. 4 is a schematic view illustrating a state of evaluation of the heat dissipation property.

EMBODIMENTS OF THE INVENTION

Hereinafter, the present invention will be described in detail.

<Thermal Conductor>

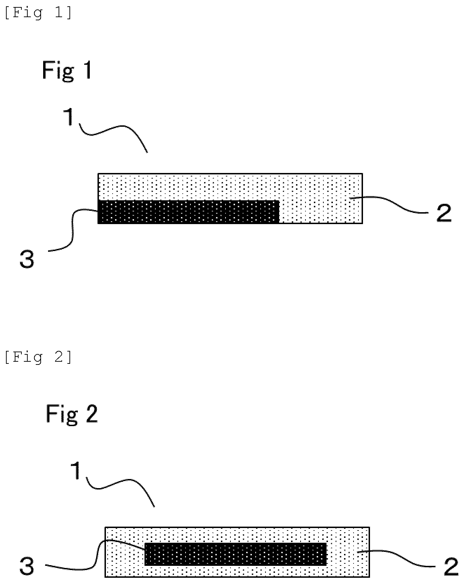

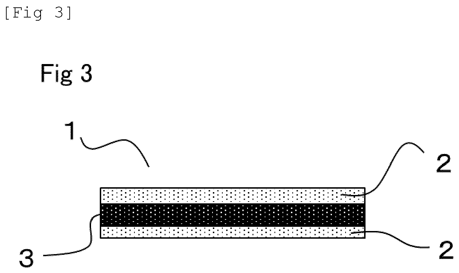

A porous structure (I) included in the thermal conductor of the present invention contains a thermally conductive member (II) having a sheet form (hereinafter, sometimes simply referred to as thermally conductive member (II)). The phrase "a porous structure (I) contains a thermally conductive member (II) " as used herein means that the thermally conductive member (II) is present as a part of the layer of the porous structure (I) .
It can be said that the porous structure (I) contains the thermally conductive member (II), in which a porous structure (I) 2 covers both surfaces (both of the surfaces) and all end faces of a thermally conductive member (II) 3, that is, the porous structure (I) contains the thermally conductive member (II) inside as in Fig. 2. An aspect as in Fig. 3 is excluded from the concept that "a porous structure (I) contains a thermally conductive member (II)". In such an aspect, all end faces of a thermally conductive member (II) 3 are exposed, that is, the thermally conductive member (II) is considered to form an independent layer singly. The thermally conductive member (II) contained in the porous structure (I) as described above can be prevented from destroying because the porous structure (I) bears the stress applied to the thermal conductor to suppress transmission of the stress to the thermally conductive member (II).
The porous structure (I) covers both surfaces and all end faces of the thermally conductive member (II), that is, contains the thermally conductive member (II) inside.
In the present invention, the porous structure (I) may cover the thermally conductive member (II) with another member such as an adhesive or a cushioning member interposed therebetween. Between the porous structure (I) and the thermally conductive member (II), a gap may be present.
However, in the present invention, at least one end face of the thermally conductive member (II) is preferably in direct contact with the porous structure (I) without another member interposed therebetween. Furthermore, at least one surface of the thermally conductive member (II) is preferably in contact with the porous structure (I). If the thermally conductive member (II) is in direct contact with the porous structure (I) as described above, the heat transmitted from the surface of the thermal conductor can be quickly transmitted from the porous structure (I) to the thermally conductive member (II).
In the present invention, the thermally conductive member (II) is preferably not bonded to the porous structure (I). In order to bond the thermally conductive member (II) and the porous structure (I) to each other, an adhesive is generally to be interposed therebetween. Thus, the proportion of the thermally conductive member (II) to the thermal conductor reduces according to the amount of the adhesive, and as a result, the heat dissipation property of the thermal conductor

deteriorates. If the thermally conductive member (II) is not bonded to the porous structure (I), a large proportion of the stress applied to the thermal conductor is borne by the porous structure (I), and thus transmission of the stress to the thermally conductive member (II) is suppressed, and the thermally conductive member (II) can be prevented from destroying.

The thermal conductor of the present invention preferably has a flexural modulus of 3 GPa or more, and more preferably 5 GPa or more. The upper limit of the flexural modulus of the thermal conductor is not particularly limited, and is usually about 20 GPa. The thermal conductor having a flexural modulus of 3 GPa or more is a rigid structure, and such a thermal conductor can be suitably used in a housing and the like. Examples of the method for setting the flexural modulus within such a range include a method in which a porous structure consisting of a fiber-reinforced resin is used as the porous structure (I).

The thermal conductor of the present invention preferably has a flexural rigidity per unit width of 0.3 N·m or more, more preferably 0.5 N·m or more, and still more preferably 1.5 N·m or more. The thermal conductor having a higher flexural rigidity per unit width is more preferable, and therefore the upper limit of the flexural rigidity per unit width is not particularly limited, but is usually about 45 N·m. The flexural rigidity per unit width can be calculated with the following equation from the elastic modulus of the thermal conductor, E (Pa), the second moment of area, I ($m^4$), and the width of the thermal conductor, b (m).

$$\text{Flexural rigidity per unit width (N·m)} = E\ (\text{Pa}) \times I\ (\text{m}^4)/b\ (\text{m})$$

In a case where the thermal conductor has a rectangular section, the second moment of area of the rectangular section, I, is $bh^3/12$ ($m^4$), and can be calculated with the following equation.

$$\text{Flexural rigidity per unit width (N·m)} = E\ (\text{Pa}) \times h^3\ (\text{m}^3)/12$$

Examples of the method for setting the flexural rigidity per unit width within the above-described range include a method in which a porous structure consisting of a fiber-reinforced resin is used as the porous structure (I). The examples also include a method in which a thick thermal conductor is used.

The thermal conductor of the present invention preferably has a maximum thickness of 0.3 mm or more and 3.0 mm or less, and more preferably 0.5 mm or more and 1.5 mm or less. Using a thin thermal conductor gives an effect of weight reduction, but a thermal conductor thinner than 0.3 mm may lack rigidity.

The thermal conductor of the present invention preferably has a specific gravity of 1.00 or less, more preferably 0.80 or less, and still more preferably 0.50 or less. The thermal conductor having a smaller specific gravity has a more excellent lightweight property, but the thermal conductor having a specific gravity of 0.10 or less may lack rigidity.

Some or all surfaces of the thermal conductor may be covered with a resin. Covering the thermal conductor with a resin can prevent short circuit caused by exposure of the reinforcing fiber. Covering the thermal conductor with a resin is also preferable from the viewpoint of designability and mechanical properties.

[Thermally Conductive Member (II)]

In the present invention, the thermally conductive member (II) has a sheet form, and has an in-plane thermal conductivity of 300 W/m·K or more. The thermally conductive member (II) preferably has an in-plane thermal conductivity of 500 W/m·K or more, and more preferably 1,000 W/m·K or more. A higher in-plane thermal conductivity is more preferable, and therefore the upper limit of the in-plane thermal conductivity is not particularly limited, but known thermally conductive members have an in-plane thermal conductivity of about 2,000 W/m·K. If the thermally conductive member (II) has an in-plane thermal conductivity of 300 W/m·K or more, the thermal diffusion in the thermal conductor is excellent in the in-plane direction, and thus the thermal conductor has an excellent heat dissipation property. The thermal conductivity of the thermally conductive member (II) can be measured with a laser flash method in which a sample is set in a sample holder for in-plane measurement, and the size of the sample is set to about 20 to 30 mm in diameter and 1 mm or less in thickness. In measurement of a material that is less likely to absorb laser light, a blackening film is thinly and uniformly formed on the sample surface. In measurement of a material having a low emissivity at a wavelength at a measurement temperature of an infrared detector, the sample back surface is treated in the same manner. In the present invention, the term "member having a sheet form" refers to a thin and wide member, and means a member having a thickness of 0.01 μm or more and 10 mm or less and an aspect ratio of the width to the thickness of 10 or more.

The material of the thermally conductive member (II) is not particularly limited as long as the in-plane thermal conductivity is 300 W/m·K or more, and examples of the usable material include ceramics, metals, graphite, highly

thermally conductive resins in which a highly thermally conductive filler is added to a resin to enhance the thermal conductivity.

The thermally conductive member (II) preferably includes a thermally conductive sheet selected from the group consisting of graphite sheets, metal sheets, and ceramic sheets, and more preferably consists of a thermally conductive sheet selected from the group consisting of graphite sheets, metal sheets, and ceramic sheets. Examples of the ceramic sheets include silica, zirconia, alumina, boron nitride, silicon carbide, and silicon nitride sheets. Examples of the metal sheets include titanium, aluminum, magnesium, iron, silver, gold, platinum, copper, and nickel sheets, and sheets consisting of an alloy containing an element described above as a main component.

The metal sheets are relatively inexpensive. In particular, the copper sheet is inexpensive and excellent in thermal conductivity, and therefore is preferable from the viewpoint of raw material cost. The graphite sheet has a small specific gravity and excellent thermal conductivity, and therefore is particularly preferable in the present invention from the viewpoint of improving the lightweight and heat dissipation properties of the thermal conductor.

Examples of the graphite sheet include sheets obtained by mixing and molding a graphite powder and a binder resin, sheets obtained by rolling expanded graphite, sheets obtained by laminating a substrate with carbon atoms with a chemical vapor deposition (CVD) method using a hydrocarbon-based gas and then annealing the laminate, and sheets obtained by graphitizing a film of a polymer compound. Among the graphite sheets, the sheets obtained by graphitizing a film of a polymer compound are preferable because of their very high thermal conductivity.

In the present invention, the thermally conductive member (II) preferably includes a laminated structure of a plurality of the thermally conductive sheets, and more preferably is a laminated structure of a plurality of the thermally conductive sheets. In particular in a graphite sheet, the orientation of the graphene structure in the sheet affects the thermal conductivity, and a thinner graphite sheet generally has higher thermal conductivity. Therefore, in the case of using a graphite sheet as the thermally conductive sheet, the heat dissipation property of the thermal conductor can be improved by using a laminated structure of a plurality of sheets as the thermally conductive member (II) . In this case, the plurality of the thermally conductive sheets included in the thermally conductive member (II) are preferably in direct contact with each other without an adhesive or the like interposed therebetween. If the thermally conductive sheets are in direct contact with each other, the proportion of the thermally conductive member (II) to the thermal conductor can be increased to improve the heat dissipation property of the thermal conductor. If the thermally conductive sheets are in direct contact with each other, the heat diffusion in the out-of-plane direction is also excellent. The number of the thermally conductive sheets in the laminate is preferably 2 or more and 10 or less, and more preferably 3 or more and 5 or less. Increasing the number of the sheets in the laminate improves the heat dissipation property of the thermal conductor. However, if the number of the sheets in the laminate is excessively increased, the processability deteriorates.

The thermally conductive member (II) preferably has an average thickness of 0.01 μm or more and 2.0 mm or less, more preferably 5 μm or more and 1.0 mm or less, and still more preferably 15 μm or more and 0.5 mm or less. If the thermally conductive member (II) has an excessively small average thickness, the heat dissipation property of the thermal conductor deteriorates, and if the thermally conductive member (II) has an excessively large average thickness, the thermal conductor is heavy. In the method of measuring the average thickness of the thermally conductive member (II), the thicknesses of nine points in the thermally conductive member (II) are measured to one decimal place using a micrometer, and the average of the thicknesses is regarded as the average thickness. The measurement points are set at three points in each line in the longitudinal direction and three points in each line in the lateral direction, that is, nine points in total so that the interval between each point and its adjacent point or the sample end is uniform in the longitudinal and lateral directions.

[Porous Structure (I)]

The material of the porous structure (I) is not particularly limited as long as it is a fiber-reinforced resin including a reinforcing fiber and a resin, and examples of the material include materials obtained by impregnating continuous fibers with a resin containing a foaming agent and foaming the resin, materials obtained by impregnating discontinuous fibers with a resin containing a foaming agent and foaming the resin, and materials obtained by impregnating discontinuous fibers with a resin and expanding the resin by spring back of the discontinuous fibers. The continuous reinforcing fiber refers to a reinforcing fiber continuous at least over a length of 15 mm or more, preferably 100 mm or more in one direction. The fiber-reinforced resin is advantageous from the viewpoint of the lightweight property and the rigidity of the thermal conductor. When the porous structure (I) contains the thermally conductive member (II), the porous structure (I) crushes or swells in the out-of-plane direction, and thus the porous structure (I) can contain the thermally conductive member (II) without positional displacement of the thermally conductive member (II).

The porous structure (I) preferably has a volume content of voids of 10% or more and 85% or less, more preferably 20% or more and 85% or less, and from the viewpoint of achieving both lightweight and mechanical properties, still more preferably 50% or more and 80% or less based on the apparent volume of the porous structure (I).

The porous structure (I) preferably has a specific gravity of 0.01 to 1.5 from the viewpoint of the lightweight property of the thermal conductor. The specific gravity is more preferably 0.1 to 1.3, and still more preferably 0.3 to 1.1. The

specific gravity is measured by cutting out the porous structure (I) and measuring it in accordance with ISO 0845 (1988).

The kind of the reinforcing fiber included in the porous structure (I) is not particularly limited, and examples of the usable reinforcing fiber include carbon fibers, glass fibers, aramid fibers, alumina fibers, silicon carbide fibers, boron fibers, metal fibers, natural fibers, and mineral fibers. These may be used alone or in combination of two or more. Among them, polyacrylonitrile (PAN)-based, pitch-based, and rayon-based carbon fibers are preferably used from the viewpoints of high specific strength, high specific rigidity, and a weight reduction effect. Moreover, glass fibers can be preferably used from the viewpoint of enhancing the economic efficiency of the thermal conductor to be obtained, and combination use of a carbon fiber and a glass fiber is particularly preferable from the viewpoint of a balance between the mechanical property and the economic efficiency. Furthermore, aramid fibers can be preferably used from the viewpoint of enhancing the impact absorption property and the formability of the thermal conductor to be obtained, and combination use of a carbon fiber and an aramid fiber is particularly preferable from the viewpoint of a balance between the mechanical property and the impact absorption property. In addition, reinforcing fibers coated with a metal such as nickel, copper, or ytterbium and pitch-based carbon fibers can also be used from the viewpoint of enhancing the conductivity of the thermal conductor to be obtained.

The reinforcing fiber is preferably surface-treated with a sizing agent from the viewpoint of improving the mechanical property. Examples of the sizing agent include polyfunctional epoxy resins, acrylic acid-based polymers, polyhydric alcohols, and polyethyleneimines. Specific examples of the sizing agent include polyglycidyl ethers of an aliphatic polyhydric alcohol such as glycerol triglycidyl ether, diglycerol polyglycidyl ether, polyglycerol polyglycidyl ether, sorbitol polyglycidyl ether, arabitol polyglycidyl ether, trimethylolpropane triglycidyl ether, and pentaerythritol polyglycidyl ether, polyacrylic acid, copolymers of acrylic acid and methacrylic acid, copolymers of acrylic acid and maleic acid, mixtures of two or more thereof, polyvinyl alcohol, glycerol, diglycerol, polyglycerol, sorbitol, arabitol, trimethylolpropane, pentaerythritol, and polyethyleneimine including more amino groups in one molecule. Among these sizing agents, glycerol triglycidyl ether, diglycerol polyglycidyl ether, and polyglycerol polyglycidyl ether are preferably used because they include many highly reactive epoxy groups in one molecule, have high water solubility, and are easy to apply.

The resin included in the porous structure (I) is not particularly limited, and may be a thermosetting resin or a thermoplastic resin. Examples the thermoplastic resin include thermoplastic resins selected from crystalline resins such as "polyesters such as polyethylene terephthalate (PET), polybutylene terephthalate (PBT), polytrimethylene terephthalate (PTT), polyethylene naphthalate (PEN), and liquid crystal polyesters, polyolefins such as polyethylene (PE), polypropylene (PP), and polybutylene, polyoxymethylene (POM), polyamide (PA), polyarylene sulfides such as polyphenylene sulfide (PPS), polyketone (PK), polyether ketone (PEK), polyether ether ketone (PEEK), polyether ketone ketone (PEKK), polyether nitrile (PEN), and fluorine-based resins such as polytetrafluoroethylene", amorphous resins such as "in addition to styrene-based resins, polycarbonate (PC), polymethyl methacrylate (PMMA), polyvinyl chloride (PVC), polyphenylene ether (PPE), polyimide (PI), polyamideimide (PAI), polyetherimide (PEI), polysulfone (PSU), polyether sulfone, and polyarylate (PAR)", in addition, phenol-based resins, phenoxy resins, further, polystyrene-based, polyolefin-based, polyurethane-based, polyester-based, polyamide-based, polybutadiene-based, polyisoprene-based, and fluorine-based resins, acrylonitrile-based and other thermoplastic elastomers, and copolymers and modified products thereof. Among them, polyolefins are preferable from the viewpoint of the lightweight property of the thermal conductor to be obtained. From the viewpoint of strength, polyamides are preferable. In particular in a case where the porous structure (I) consists of a fiber-reinforced resin, polyamides are preferable from the viewpoint of interfacial bonding strength between the reinforcing fiber and the resin. Examples of the thermosetting resin include unsaturated polester resins, vinyl ester resins, epoxy resins, phenol (resole) resins, a urea resin, a melamine resin, polyimide resins, a maleimide resin, a benzoxazine resin, and resins obtained by blending two or more of these resins. In particular in a case where the porous structure (I) consists of a fiber-reinforced resin, epoxy resins are preferably used from the viewpoint of interfacial bonding strength between the reinforcing fiber and the resin.

An additive may be added to the resin according to the application, and examples of the additive include fillers such as mica, talc, kaolin, hydrotalcite, sericite, bentonite, xonotlite, sepiolite, smectite, montmorillonite, wollastonite, silica, calcium carbonate, glass beads, glass flakes, glass microballoons, clay, molybdenum disulfide, titanium oxide, zinc oxide, antimony oxide, calcium polyphosphate, graphite, barium sulfate, magnesium sulfate, zinc borate, calcium borate, aluminum borate whisker, potassium titanate whisker, and polymer compounds, conductivity imparting materials such as metal-based and metal oxide-based conductivity imparting materials, carbon black, and a graphite powder, halogen-based flame retardants such as brominated resins, antimony-based flame retardants such as antimony trioxide and antimony pentoxide, phosphorus-based flame retardants such as ammonium polyphosphate, aromatic phosphates, and red phosphorus, organic acid metal salt-based flame retardants such as boric acid metal salts, carboxylic acid metal salts, and aromatic sulfonimide metal salts, inorganic flame retardants such as zinc borate, zinc, zinc oxide, and zirconium compounds, nitrogen-based flame retardants such as cyanuric acid, isocyanuric acid, melamine, melamine cyanurate, melamine phosphate, and nitrogenated guanidine, fluorine-based flame retardants such as PTFE, silicone-based flame retardants such as polyorganosiloxanes, metal hydroxide-based flame retardants such as aluminum hydroxide and magnesium hydroxide, other flame retardants, flame retardant aids such as cadmium oxide, zinc oxide, cuprous oxide, cupric oxide, ferrous oxide, ferric oxide, cobalt oxide, manganese oxide, molybdenum oxide, tin oxide, and titanium oxide,

pigments, dyes, lubricants, mold release agents, compatibilizers, dispersants, crystal nucleating agents such as mica, talc, and kaolin, plasticizers such as phosphate esters, heat stabilizers, antioxidants, coloration preventing agents, ultraviolet absorbers, fluidity modifiers, foaming agents, antibacterial agents, vibration controlling agents, deodorants, sliding modifiers, and antistatic agents such as polyether ester amides. In particular in the applications including electrical and electronic equipment, automobiles, and aircraft, flame retardancy may be required, and phosphorus-based flame retardants, nitrogen-based flame retardants, and inorganic flame retardants are preferably added.

The amount of the flame retardant is preferably 1 to 20 parts by mass with respect to 100 parts by mass of the resin, in order to keep a good balance of properties such as the mechanical properties of the resin used and resin fluidity during molding along with exhibition of flame retardant effect. The amount is more preferably 1 to 15 parts by mass.

In the thermal conductor of the present invention, the porous structure (I) particularly preferably consists of a discontinuous fiber-reinforced resin. The discontinuous fiber-reinforced resin has a structure in which the discontinuous fibers form a three-dimensional network and are bonded to each other with a resin at their intersections. Bonding the discontinuous fibers to each other with a resin increases the shear modulus of the porous structure (I) to increase the rigidity of the thermal conductor. Hereinafter, this aspect will be described.

In the discontinuous fiber-reinforced resin, the discontinuous fibers are preferably present as less than 500 of fine-denier strands, and more preferably dispersed in a single fiber form. The discontinuous fibers preferably have a fiber length of 1 to 50 mm, and more preferably 3 to 30 mm. If the fiber length is 1 mm or more, the reinforcing effect by the discontinuous fibers can be efficiently exhibited. If the fiber length is 50 mm or less, the dispersion of the discontinuous fibers can be well maintained.

The proportion of the number of bonding portions in which single fibers of the discontinuous fibers are bonded to each other with a resin is 50% or more, more preferably 70% or more, and still more preferably 90% or more with respect to the number of all intersecting portions in which the discontinuous fibers intersect each other.

The mass proportion of the discontinuous fibers is preferably 5 to 60% by mass, more preferably 10 to 50% by mass, and still more preferably 15 to 40% by mass with respect to the porous structure (I) from the viewpoint of achieving both a mechanical property and moldability.

In the porous discontinuous fiber-reinforced resin, the surface of the discontinuous fibers is preferably coated with a resin at a coverage ratio of 30% or more, more preferably 50% or more, and still more preferably 80% or more. With such a coverage ratio, the porous structure (I) can have high rigidity. The coverage ratio is measured by observing a section of the porous structure (I) with a scanning electron microscope (SEM) and distinguishing the reinforcing fibers from the resin.

The void of the porous discontinuous fiber-reinforced resin preferably has an average pore size of 200 μm or less as measured with a mercury intrusion method. The average pore size is preferably 10 μm or more and 150 μm or less, and more preferably 30 μm or more and 100 μm or less. If the average pore size is smaller than such a range, the weight reduction and curing may be insufficient, and if the average pore size is larger than such a range, the mechanical properties may deteriorate. The mercury intrusion method is a method of measuring the pore size using a mercury porosimeter in which mercury is injected into a sample at a high pressure to determine the pore size from the pressure applied and the amount of mercury injected. The average pore size can be calculated with the following equation.

$$\text{Average pore size (m)} = 4 \times \text{pore volume (m}^3\text{/g)/specific surface area (m}^2\text{/g)}$$

<Method for Manufacturing Thermal Conductor>

The method for manufacturing a thermal conductor of the present invention is a method for manufacturing the thermal conductor of the present invention, and includes, in order described below, the steps of disposing a precursor of the porous structure (I) on both surfaces and all end faces of the thermally conductive member (II) [3] and heat-pressing the precursor and the thermally conductive member (II) . By using such a method, molding and bonding of the porous structure (I) can be performed simultaneously, resulting in excellent productivity. In the method for manufacturing the thermal conductor of the present invention, the phrase "disposing a precursor of the porous structure (I) on at least one surface and at least one end face of the thermally conductive member (II)" means disposing a precursor of the porous structure (I) so that the precursor covers at least one surface and at least one end face of the thermally conductive member (II).

In the method for manufacturing the thermal conductor of the present invention, the precursor of the porous structure (I) is disposed on both surfaces and all end faces of the thermally conductive member (II), that is, the precursor contains the thermally conductive member (II) inside.

In a case where the porous structure (I) includes a discontinuous fiber-reinforced resin, the precursor of the porous structure (I) can be manufactured by impregnating a discontinuous reinforcing fiber mat with a film or a nonwoven fabric of a thermoplastic resin while the film or the nonwoven fabric is compressed. The discontinuous reinforcing fiber mat is manufactured, for example, by previously dispersing discontinuous reinforcing fibers in a strand form, preferably in a substantially single fiber form, and more preferably in a single fiber form. More specific examples of the known technique of

manufacturing the discontinuous reinforcing fiber mat include dry processes such as an airlaid method in which discontinuous reinforcing fibers are dispersed with an air flow and formed into a sheet and a carding method in which discontinuous reinforcing fibers are formed into a sheet while mechanically combed, and a wet process by the Radright method in which discontinuous reinforcing fibers are stirred in water and made into paper.

Examples of the method of forming discontinuous reinforced fibers into a form closer to a single fiber form include, in the dry processes, a method in which fiber-opening bars are provided, a method in which fiber-opening bars are vibrated, a method in which a card having fine meshes is used, and a method in which the rotation speed of a card is adjusted. In the wet processes, the examples include a method in which the conditions for stirring discontinuous reinforcing fibers are adjusted, a method in which the concentration of reinforcing fibers in a dispersion liquid is reduced, a method in which the viscosity of a dispersion liquid is adjusted, and a method in which a vortex flow is suppressed when a dispersion liquid is transferred. The discontinuous reinforcing fiber mat is particularly preferably manufactured with a wet process, and thus the proportion of the reinforcing fibers in the discontinuous reinforcing fiber mat can be easily adjusted by increasing the concentration of input fibers or adjusting the flow speed (flow rate) of the dispersion liquid and the speed of the mesh conveyor. For example, decreasing the speed of the mesh conveyor with respect to the flow speed of the dispersion liquid makes the orientation of the fibers in the discontinuous reinforcing fiber mat obtained less likely to be directed toward the pulling direction, and thus a bulky discontinuous reinforcing fiber mat can be manufactured. The discontinuous reinforcing fiber mat may include discontinuous reinforcing fibers only, a mixture of discontinuous reinforcing fibers with a matrix resin component having a powder or fiber form, a mixture of discontinuous reinforcing fibers with an organic or inorganic compound, or discontinuous reinforcing fibers that are bonded to each other with a resin component.

The pressure during impregnation of the discontinuous reinforcing fiber mat with a film or nonwoven fabric of a thermoplastic resin is preferably 0.5 MPa or more and 30 MPa or less, and more preferably 1 MPa or more and 5 MPa or less. If the pressure is less than 0.5 MPa, the discontinuous reinforcing fiber mat may be not impregnated with a thermoplastic resin, and if the pressure is more than 30 MPa, it is difficult to adjust the thickness of the precursor of the porous structure. The temperature during impregnation with a film or nonwoven fabric of a thermoplastic resin is preferably equal to or higher than the melting point or glass transition point of the thermoplastic resin, more preferably equal to or higher than a temperature higher than the melting point or glass transition point by 10°C, and still more preferably equal to or higher than a temperature higher than the melting point or glass transition point by 20°C. If the temperature during impregnation with a film or nonwoven fabric of a thermoplastic resin is excessively higher than the melting point or glass transition point of the thermoplastic resin, the thermoplastic resin may decompose or deteriorate, and therefore the temperature during the impregnation is preferably equal to or lower than a temperature higher than the melting point or glass transition point of the thermoplastic resin by 150°C.

As equipment to perform the method of impregnating the discontinuous reinforcing fiber mat with a film or nonwoven fabric of a thermoplastic resin, a compression molding machine or a double belt press machine can be suitably used. The compression molding machine is a batch type machine, and the productivity can be improved by employing an intermittent type press system including two or more machines for heating and cooling in combination. The double belt press machine is a continuous type machine that can easily perform continuous processing, and thus is excellent in continuous productivity.

The method for manufacturing the thermal conductor of the present invention includes a step of heat-pressing. In this step, a precursor of the porous structure (I) is disposed on at least one surface and at least one end face of the thermally conductive member (II), and the resulting product is heat-pressed at an expansion temperature of the precursor of the porous structure (I) or a temperature required for bonding, and thus the core member can contain the thermally conductive member. In a case where the discontinuous reinforcing fiber mat is used at this time, the resin impregnated into the discontinuous reinforcing fiber mat melts or softens to release the compressed state, and thus spring back is caused. By this spring back, fine voids are formed to form a porous discontinuous fiber-reinforced resin. As equipment for the heat-pressing, a compression molding machine can be suitably used. The compression molding machine is a batch type machine, and the productivity can be improved by employing an intermittent type press system including two or more machines for heating and cooling in combination.

<Housing>

The housing of the present invention includes the thermal conductor of the present invention. By using the thermal conductor of the present invention, a housing having both an excellent mechanical property and an excellent lightweight property can be obtained. Such a housing is preferable also from the viewpoint of mass productivity because it can be molded by high-cycle molding such as press molding.

The housing of the present invention can be obtained, for example, by producing a thermal conductor having a desired housing form with the above-described method for manufacturing the thermal conductor.

EXAMPLES

Hereinafter, the present invention will be described in more detail with reference to Examples.

(1) Measurement of Flexural Modulus of Thermal Conductor

Flexural properties of a flexural test specimen of the produced thermal conductor were measured in accordance with the method of ISO 178 (1993). The flexural modulus was obtained by calculating the average values of results of five measurements. As a measuring apparatus, "Instron" (registered trademark) 5565 universal material testing machine manufactured by Instron Japan Co., Ltd. was used.

(2) Evaluation of Heat Dissipation Property of Thermal Conductor

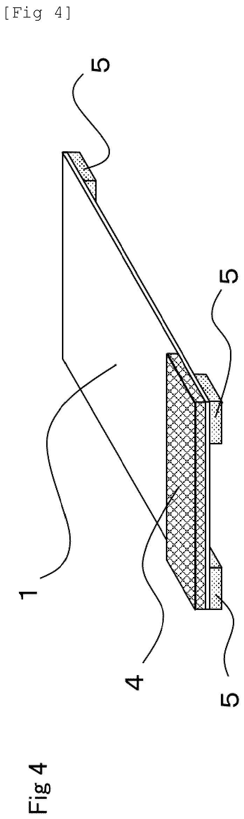

As shown in Fig. 4, on the back surface of the produced thermal conductor 1, rubber spacers 5 each having a size of 10 mm × 10 mm and a thickness of 3 mm were attached to four corners of the thermal conductor 1 respectively, and the thermal conductor 1 was placed on a test stand. On the surface of the placed thermal conductor, a micro ceramic heater 4 having a size of 50 mm × 25 mm (MICRO CERAMIC HEATER MS-2 (trade name) manufactured by SAKAGUCHI E. H VOC CORP.) was placed on one corner of the thermal conductor, and the heater was heated at 10 W under constant current and constant voltage. The heat dissipation property was evaluated from the heater temperature when the heater temperature became constant after 15 minutes from the start of heating the heater in accordance with the following criteria.

A: Heater temperature is lower than 130°C (heat dissipation property is high)
B: Heater temperature is 130°C or higher (heat dissipation property is low)

(Reference Example 1) Production of Carbon Fiber Bundle

A polymer with polyacrylonitrile as a main component was subjected to spun processing and calcined processing to obtain a continuous carbon fiber bundle having a total number of filaments of 12,000. A sizing agent was applied to the continuous carbon fiber bundle with an immersion method, and the continuous carbon fiber bundle was dried in the air at 120°C to obtain a carbon fiber bundle. This carbon fiber bundle had the following properties.

Single fiber diameter: 7 μm
Mass per unit length: 0.8 g/m
Density: 1.8 g/cm$^3$
Tensile strength: 4.2 GPa
Tensile elastic modulus: 230 GPa
Kind of sizing agent: polyoxyethylene oleyl ether
Adhesion amount of sizing agent: 1.5% by mass

(Reference Example 2) Production of Carbon Fiber Mat

The carbon fiber bundle in Reference Example 1 was cut into a fiber length of 6 mm with a cartridge cutter to obtain a chopped carbon fiber bundle. An aqueous dispersion of 0.1% by mass of a surfactant (Polyoxyethylene Lauryl Ether (trade name) manufactured by NACALAI TESQUE, INC.) was produced, and the aqueous dispersion and the chopped carbon fiber bundle were put into a paper machine, and thus a carbon fiber mat was produced.

The paper machine includes a dispersion tank, a paper-making tank, and a transferring part that connects the dispersion tank and the paper-making tank. The dispersion tank is equipped with a stirrer, and can disperse a dispersion and a chopped carbon fiber bundle that are put into the tank. The paper-making tank includes a mesh conveyor having a paper-making surface at the bottom. To the mesh conveyor, a conveyor capable of conveying a carbon fiber mat obtained by papermaking is connected. Papermaking was performed at a fiber concentration in the dispersion of 0.05% by mass. The carbon fiber mat obtained by papermaking was dried in a drying furnace at 200°C. Subsequently, the upper surface portion of the carbon mat to be conveyed by the conveyor was sprayed with an aqueous dispersion of 3% by mass of a binder ("POLYMENT" (registered trademark) SK-1000 manufactured by NIPPON SHOKUBAI CO., LTD.) as a binder. The excess binder was sucked, and the resulting mat was dried in a drying furnace at 200°C to obtain a carbon fiber mat. The obtained carbon fiber mat had a basis weight of 50 g/m$^2$.

(Reference Example 3) Production of Polypropylene Resin Film

Two resins of 90% by mass of an unmodified polypropylene resin ("Prime Polypro" (registered trademark) J105G manufactured by Prime Polymer Co., Ltd.) and 10% by mass of an acid-modified polypropylene resin ("ADMER" (registered trademark) QE510 manufactured by Mitsui Chemicals, Inc.) were blended. This blended product was melt-kneaded with an extruder and then extruded from a T-shaped die. After that, the extruded resin was taken up with a chill roll at 60°C, and cooled and solidified to obtain a polypropylene resin film.

(Example 1)

The carbon fiber mat in Reference Example 2, the polypropylene resin film in Reference Example 3, and a graphite sheet ("PGS" (registered trademark) EYGS182307 manufactured by Panasonic Corporation, in-plane thermal conductivity: 1,000 W/m·K) were used to produce a thermal conductor. The carbon fiber mat and the polypropylene resin film were adjusted to have a size of 50 mm × 150 mm, the graphite sheet was adjusted to have a size of 40 mm × 140 mm, and then they were stacked into a laminate in the order of [polypropylene resin film/carbon fiber mat/polypropylene resin film/carbon fiber mat/graphite sheet/carbon fiber mat/polypropylene resin film/carbon fiber mat/polypropylene resin film]. At this time, the graphite sheet was disposed in the center of the laminated body. The laminated body was sandwiched between release films, and further sandwiched between tool plates. The resulting product was put into a press molding machine having a plate surface temperature of 180°C, and heat-pressed at 3 MPa for 10 minutes to impregnate the carbon fiber mat with the polypropylene resin. Next, a spacer having a thickness of 1 mm was inserted between the tool plates, the resulting product was put into a press molding machine having a plate surface temperature of 40°C, and cooled and pressed at a surface pressure of 3 MPa until the laminated body was cooled, and thus a thermal conductor was obtained in which a porous structure was disposed around a thermally conductive member. The thickness of the sample was measured with a micrometer, and as a result, the thickness was 1.0 mm. Inserting a spacer having a thickness of 1 mm between the tool plates causes spring back of the carbon fiber mat impregnated with the polypropylene resin, and thus a porous structure is obtained. Note that the sample in this example is a flat plate and thus has a constant thickness. Therefore, the thickness measured at any point of the sample is the maximum thickness. The same applies to other Examples and Comparative Examples. Preforming and press molding of a flexural test specimen were performed in the same manner as described above except that the carbon fiber mat and the polypropylene resin film were adjusted to have a size of 50 mm × 40 **mm,** and that the graphite sheet was adjusted to have a size of 40 mm × 30 mm, and thus a flexural test specimen of a thermal conductor was obtained in which a porous structure was disposed around a thermally conductive member. In the obtained thermal conductor, the graphite sheet was protected by the porous structure including the reinforcing fibers, and therefore the thermal conductor exhibited excellent rigidity, an excellent lightweight property, and an excellent heat dissipation property.

(Example 2)

Preforming and press molding of a thermal conductor and a flexural test specimen were performed in the same manner as in Example 1 except that the number of the polypropylene resin films and the number of the carbon fiber mats were changed, and that the carbon fiber mat, the polypropylene resin film, and the graphite sheet were stacked into a laminate in the order of [polypropylene resin film/carbon fiber mat/graphite sheet/carbon fiber mat/polypropylene resin film/carbon fiber mat/polypropylene resin film], and thus a thermal conductor and a flexural test specimen of a thermal conductor were obtained, in both of which a porous structure was disposed around a thermally conductive member. In the obtained thermal conductor, the porosity was increased while the excellent rigidity and the excellent heat dissipation property were maintained, and therefore the thermal conductor exhibited a more excellent lightweight property.

(Comparative Example 1)

Preforming and press molding of a thermal conductor and a flexural test specimen were performed in the same manner as in Example 1 except that no carbon fiber mat was included in the laminate, and that the number of the polypropylene resin films was adjusted so that the laminate has a thickness of 1.0 mm, and that the polypropylene resin film and the graphite sheet were stacked into a laminate in the order of [polypropylene resin film/graphite sheet/polypropylene resin film], and thus a thermal conductor and a flexural test specimen of a thermal conductor were obtained, in both of which a polypropylene resin film was disposed around a thermally conductive member. In the obtained thermal conductor, the graphite sheet was protected by the dense resin having no void, and therefore the lightweight property was poor. The thermal conductor included no reinforcing fiber, and therefore its rigidity was also poor.

(Comparative Example 2)

Preforming and press molding of a thermal conductor were performed in the same manner as in Example 1 except that the graphite sheet and a foamed polypropylene sheet (EFCELL (registered trademark) RC2008W manufactured by Furukawa Electric Co., Ltd., density: 0.46 g/cm$^3$) were used, and that the thickness of the foamed polypropylene sheet was adjusted to 0.5 mm, and that the graphite sheet and the foamed polypropylene sheet were stacked into a laminate in the order of [foamed polypropylene sheet/graphite sheet/foamed polypropylene sheet , and thus a thermal conductor was obtained in which foamed polypropylene was disposed around a thermally conductive member. The obtained thermal conductor was protected by the foamed resin, and therefore the thermal conductor exhibited an excellent lightweight property, but had remarkably low rigidity.

(Comparative Example 3)

Preforming and press molding of a thermal conductor were performed in the same manner as in Example 1 except that no graphite sheet was included in the laminate, and thus a thermal conductor including no thermally conductive member was obtained. Also at the time of producing a flexural test specimen, preforming and press molding of a flexural test specimen were performed in the same manner as in Example 1 except that no graphite sheet was included in the laminate, and thus a flexural test specimen of a thermal conductor including no thermally conductive member was obtained. The obtained thermal conductor had a low heat dissipation property because the thermal conductor included no thermally conductive member.

(Comparative Example 4)

Preforming and press molding of a thermal conductor were performed in the same manner as in Example 1 except that the graphite sheet was adjusted to have a size of 50 × 150 mm, and thus a thermal conductor was obtained in which all ends of a thermally conductive member were exposed. At the time of producing a flexural test specimen, preforming and press molding of a flexural test specimen were performed in the same manner as in Example 1 except that the graphite sheet was adjusted to have a size of 50 mm × 40 mm, and thus a flexural test specimen of a thermal conductor was obtained in which all ends of a thermally conductive member were exposed. In the obtained thermal conductor, all ends of the graphite sheet were exposed, and therefore delamination occurred between the layers of the graphite sheet, resulting in deterioration of the rigidity.

[Table 1]

| | Example 1 | Example 2 | Comparative Example 1 | Comparative Example 2 | Comparative Example 3 | Comparative Example 4 |
|---|---|---|---|---|---|---|
| Maximum thickness [mm] | 1.0 | 1.0 | 1.0 | 1.0 | 1.0 | 1.0 |
| Porous structure | Porous fiber-reinforced member | Porous fiber-reinforced member | Resin | Foamed resin | Porous fiber-reinforced member | Porous fiber-reinforced member |
| Thermally conductive member | Graphite sheet | Graphite sheet | Graphite sheet | Graphite sheet | - | Graphite sheet |
| State of end of thermally conductive member | Porous structure is disposed around end | Porous structure is disposed around end | Porous structure is disposed around end | Porous structure is disposed around end | - | All ends are exposed |
| Specific gravity [-] | 0.64 | 0.49 | 1.01 | 0.59 | 0.58 | 0.66 |
| Porosity [%] | 49 | 62 | 0 | 50 | 50 | 49 |
| Flexural modulus [GPa] | 6.8 | 4.4 | 1.7 | 0.4 | 7.0 | 2.5 |

(continued)

| | Example 1 | Example 2 | Comparative Example 1 | Comparative Example 2 | Comparative Example 3 | Comparative Example 4 |
|---|---|---|---|---|---|---|
| Flexural rigidity per unit width [N ·m] | 0.57 | 0.37 | 0.14 | 0.03 | 0.58 | 0.21 |
| Heater temperature [°C] | 115 | 118 | 114 | 121 | 148 | 114 |
| Heat dissipation property [-] | A | A | A | A | B | A |

INDUSTRIAL APPLICABILITY

The thermal conductor of the present invention can have both an excellent lightweight property and excellent rigidity. Therefore, it can be applied to a wide range of industrial fields, for example, as a structural member of electrical and electronic equipment, robots, two-wheeled vehicles, automobiles, and aircraft. The thermal conductor can be particularly preferably applied to a housing, of portable electronic equipment or the like, that is to have a high lightweight property.

DESCRIPTION OF REFERENCE SIGNS

1: Thermal conductor
2: Porous structure (I)
3: Thermally conductive member (II)
4: Heater
5: Rubber spacer

**Claims**

1. A thermal conductor [1] comprising:

   a porous structure (I) [2] including a reinforcing fiber and a resin; and
   a thermally conductive member (II) [3] having a sheet form, the thermally conductive member (II) [3] having an in-plane thermal conductivity of 300 W/m·K or more and the thermally conductive member (II) [3] is contained in the porous structure (I) [2], wherein the porous structure (I) [2] covers both surfaces and all end faces of the thermally conductive member (II) [3].

2. The thermal conductor [1] according to claim 1, wherein the thermally conductive member (II) [3] includes a thermally conductive sheet selected from the group consisting of graphite sheets, metal sheets, and ceramic sheets.

3. The thermal conductor [1] according to claim 2, wherein the thermally conductive member (II) [3] includes a laminated structure of a plurality of the thermally conductive sheets.

4. The thermal conductor [1] according to any one of claims 1 to 3, wherein the porous structure (I) [2] consists of a discontinuous fiber-reinforced resin.

5. The thermal conductor [1] according to any one of claims 1 to 4, having a flexural modulus of 3 GPa or more.

6. The thermal conductor [1] according to any one of claims 1 to 5, having a flexural rigidity per unit width of 0.3 N·m or more.

7. The thermal conductor [1] according to any one of claims 1 to 6, having a maximum thickness of 0.3 mm or more and 3.0 mm or less.

**8.** The thermal conductor [1] according to any one of claims 1 to 7, having a specific gravity of 1.00 or less.

**9.** A housing comprising the thermal conductor [1] according to any one of claims 1 to 8.

**10.** A method for manufacturing the thermal conductor [1] according to any one of claims 1 to 8, the method comprising, in order described below, the steps of:

disposing a precursor of the porous structure (I) [2] on both surfaces and all end faces of the thermally conductive member (II) [3]
; and
heat-pressing the precursor and the thermally conductive member (II) [2].

## Patentansprüche

**1.** Wärmeleiter [1], umfassend:

eine poröse Struktur (I) [2], die eine Verstärkungsfaser und ein Harz umfasst; und
ein wärmeleitfähiges Element (II) [3], das eine Blattform aufweist, wobei das wärmeleitfähige Element (II) [3] eine Wärmeleitfähigkeit in der Ebene von 300 W/m·K oder mehr aufweist und das wärmeleitfähige Element (II) [3] in der porösen Struktur (I) [2] enthalten ist, wobei die poröse Struktur (I) [2] beide Oberflächen und alle Endseiten des wärmeleitfähigen Elements (II) [3] bedeckt.

**2.** Wärmeleiter [1] nach Anspruch 1, wobei das wärmeleitfähige Element (II) [3] ein wärmeleitfähiges Blatt umfasst, das ausgewählt ist aus der Gruppe bestehend aus Graphitblättern, Metallblättern und Keramikblättern.

**3.** Wärmeleiter [1] nach Anspruch 2, wobei das wärmeleitfähige Element (II) [3] eine laminierte Struktur aus einer Vielzahl der wärmeleitfähigen Blätter umfasst.

**4.** Wärmeleiter [1] nach einem der Ansprüche 1 bis 3, wobei die poröse Struktur (I) [2] aus einem diskontinuierlichen faserverstärkten Harz besteht.

**5.** Wärmeleiter [1] nach einem der Ansprüche 1 bis 4, der einen Biegemodul von 3 GPa oder mehr aufweist.

**6.** Wärmeleiter [1] nach einem der Ansprüche 1 bis 5, der eine Biegesteifigkeit pro Einheitsbreite von 0,3 N·m oder mehr aufweist.

**7.** Wärmeleiter [1] nach einem der Ansprüche 1 bis 6, der eine maximale Dicke von 0,3 mm oder mehr und 3,0 mm oder weniger aufweist.

**8.** Wärmeleiter [1] nach einem der Ansprüche 1 bis 7, der eine spezifische Dichte von 1,00 oder weniger aufweist.

**9.** Gehäuse, umfassend den Wärmeleiter [1] nach einem der Ansprüche 1 bis 8.

**10.** Verfahren zum Herstellen des Wärmeleiters [1] nach einem der Ansprüche 1 bis 8, wobei das Verfahren in der nachstehend beschriebenen Reihenfolge die Schritte umfasst:

Anordnen eines Vorläufers der porösen Struktur (I) [2] auf beiden Oberflächen und allen Endseiten des wärmeleitfähigen Elements (II) [3]; und
Heißpressen des Vorläufers und des wärmeleitfähigen Elements (II) [3].

## Revendications

**1.** Conducteur de chaleur [1], comprenant :

une structure poreuse (I) [2] comprenant une fibre de renfort et une résine ; et
un élément thermoconducteur (II) [3] ayant une forme de feuille, l’élément thermoconducteur (II) [3] ayant une

conductivité thermique dans le plan de 300 W/m K ou plus, et l'élément thermoconducteur (II) [3] étant contenu dans la structure poreuse (I) [2], la structure poreuse (I) [2] recouvrant les deux faces et toutes les faces d'extrémité de l'élément thermoconducteur (II) [3].

**2.** Conducteur de chaleur [1] selon la revendication 1, l'élément thermoconducteur (II) [3] comprenant une feuille thermoconductrice sélectionnée parmi le groupe constitué de feuilles de graphite, de feuilles de métal et de feuilles céramiques.

**3.** Conducteur de chaleur [1] selon la revendication 2, l'élément thermoconducteur (II) [3] comprenant une structure stratifiée constituée d'une pluralité de feuilles thermoconductrices.

**4.** Conducteur de chaleur [1] selon l'une quelconque des revendications 1 à 3, la structure poreuse (I) [2] étant constituée d'une résine renforcée par des fibres discontinues.

**5.** Conducteur de chaleur [1] selon l'une quelconque des revendications 1 à 4, ayant un module d'élasticité en flexion de 3 GPa ou plus.

**6.** Conducteur de chaleur [1] selon l'une quelconque des revendications 1 à 5, ayant une rigidité à la flexion par unité de largeur de 0,3 N m ou plus.

**7.** Conducteur de chaleur [1] selon l'une quelconque des revendications 1 à 6, ayant une épaisseur maximale de 0,3 mm ou plus et de 3,0 mm ou moins.

**8.** Conducteur de chaleur [1] selon l'une quelconque des revendications 1 à 7, ayant une densité relative de 1,00 ou moins.

**9.** Boîtier comprenant le conducteur de chaleur [1] selon l'une quelconque des revendications 1 à 8.

**10.** Procédé de fabrication du conducteur de chaleur [1] selon l'une quelconque des revendications 1 à 8, le procédé comprenant, dans l'ordre indiqué ci-dessous, les étapes consistant à :

disposer un précurseur de la structure poreuse (I) [2] sur les deux surfaces et toutes les faces d'extrémité de l'élément thermoconducteur (II) [3] ; et
pressage à chaud du précurseur et de l'élément thermoconducteur (II) [2].

[Fig 1]

Fig 1
1
2
3

[Fig 2]

Fig 2
1
3
2

[Fig 3]

Fig 3
1
2
3
2

[Fig 4]

5
5
1
4
5
Fig 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2016002457 A
- JP 2006095935 A
- US 2018198293 A
- US 2013273275 A1